# EUROPÄISCHE PATENTSCHRIFT

(11) **EP 1 977 919 B1**
(45) Veröffentlichungstag und Bekanntmachung des Hinweises auf die Patenterteilung: **24.07.2013**
(21) Anmeldenummer: 08004230.2
(22) Anmeldetag: 07.03.2008
(51) Int. Cl.: B60J 5/04, B60J 5/06

(54) **Kraftfahrzeug mit einer nach hinten öffnenden Tür**
Motor vehicle with a door that opens to the rear
Véhicule automobile doté d'une porte s'ouvrant vers l'arrière

(30) Priorität: 02.04.2007 DE 102007015870
(43) Veröffentlichungstag der Anmeldung: 08.10.2008
(73) Patentinhaber: GM Global Technology Operations LLC, Detroit, MI 48265-3000 (US)
(72) Erfinder: Steiger, Stephan, 55268 Nieder-Olm (DE); Kappert, Bernd, 65428 Rüsselsheim (DE)
(74) Vertreter: Strauss, Peter

(56) Entgegenhaltungen:
- WO-A-2007/095937
- DE-A1- 1 755 687
- DE-A1- 3 702 710
- FR-A- 2 685 536
- US-A1- 2002 056 233
- US-A1- 2004 042 144
- US-A1- 2004 201 245
- US-A1- 2006 006 672

## Beschreibung

Die Erfindung bezieht sich auf ein Kraftfahrzeug mit mindestens einer gegen eine Fahrtrichtung zu öffnenden Tür, der ein Türkontaktschalter zugeordnet ist, nach dem Oberbegriff des Anspruchs 1.

Gegen die Fahrtrichtung nach hinten zu öffnende Türen, im englischen als "suicide-doors" bezeichnet, finden wieder eine zunehmende Verbreitung bei modernen Kraftfahrzeugkarosserien, um einerseits geänderte ästhetische Anforderungen zu erfüllen und andererseits bei nach vorne und hinten zu öffnenden Türen an einer Seite des Kraftfahrzeugs den Einstiegsbereich zu vergrößern. Üblicherweise ist das Kraftfahrzeug mit zwei derartigen Fondtüren ausgestattet ist.

Besonders bei solchen Türen ist es notwendig, diese während der Fahrt des Kraftfahrzeugs stets geschlossen zu halten, da durch das sich nach hinten Öffnen der Türen, in Fahrtrichtung gesehen, ein Herausfallen beispielsweise eines Fondpassagiers während der Fahrt möglich ist. Es sind verschiedene Türverriegelungssysteme bzw. Zentralverriegelungen bekannt, bei denen nach dem Losfahren des Kraftfahrzeugs nach Überschreiten einer ersten Grenzgeschwindigkeit sämtliche Türen und Klappen des Kraftfahrzeugs automatisch verriegelt werden, um ein unbeabsichtigtes Öffnen beispielsweise einer Fondtür zu vermeiden. In gleicher Weise kann das selbsttätige Verriegeln nach einem festlegbaren Zeitraum nach dem Losfahren ausgeführt werden. Hierzu werden Sensorsignale, die bereits im Kraftfahrzeug vorhanden sind, von dem Türverriegelungssystem verwendet bzw. diesem zugeleitet.

Die US-A-5 655 800 zeigt eine Verriegelungsvorrichtung insbesondere für eine nach hinten zu öffnende Tür, mit der eine solche geschlossene Tür zuverlässig verriegelt werden kann, um ein unbeabsichtigtes Öffnen der Tür zu vermeiden. Eine geschwindigkeitsabhängige Ansteuerung ist nicht beschrieben.

Im Weiteren offenbart die DE 199 23 703 A1 eine Motorhauben-Verriegelungsvorrichtung mit einem elektrischen Antrieb. Dabei kann die Verriegelung nur dann entriegelt werden, wenn beispielsweise eine Handbremse des Kraftfahrzeugs angezogen ist und/oder ein Getriebe des Kraftfahrzeugs ausgekoppelt ist, um zu gewährleisten, dass die Motorhaube tatsächlich nur bei stillstehendem Kraftfahrzeug geöffnet werden kann.

Der DE 41 31 979 A1 ist ein Türverriegelungssystem für Kraftfahrzeuge zu entnehmen, bei dem die Türen bei Überschreiten einer vorgegebenen Geschwindigkeit selbsttätig verriegelt werden, wobei eine der Türen von innen von einem Nutzer nach wie vor geöffnet werden kann und nachfolgend die anderen Türen des Kraftfahrzeugs ebenfalls entriegelt werden.

Weiterhin ist es aus der nicht vorveröffentlichten DE 10 2006 008 906 A1 ein Türverriegelungssystem für eine gegen eine Fahrtrichtung eine Kraftfahrzeugs zu öffnende Tür bekannt, wobei ein Geschwindigkeitssignal des eine Bremse umfassenden Kraftfahrzeugs berücksichtigbar ist. Bei geöffneter Tür kann ein Motor des Kraftfahrzeugs nur dann gestartet werden, wenn ein Getriebe des Kraftfahrzeugs in den Leerlauf geschaltet und die Bremse des Kraftfahrzeugs betätigt ist. Somit kann das Kraftfahrzeug mit geöffneter Tür überhaupt nicht losfahren. Allerdings kann hierin vom Nutzer des Kraftfahrzeugs eine zu große Bevormundung durch eine solche Sicherheitsmaßnahme des Türverriegelungssystems gesehen werden.

Ferner offenbart die US 2002/056233 A1 ein Kraftfahrzeug mit einer Schiebetür und mit einer Stromversorgungsvorrichtung zur Versorgung der Schiebetür ausgehend von einer Fahrzeugkarosserie aus mit elektrischem Strom. Der Schiebetür ist ein Türkontaktschalter zugeordnet und bei Feststellung, dass die Schiebetür geöffnet ist, leuchtet eine Lampe auf.

Darüber hinaus beschreibt die DE 37 027 10 A1 eine fremdkraftbetätigte Türschließanlage, insbesondere für Fahrzeuge des öffentlichen Personennahverkehrs, mit einer Notbetätigung zum Unwirksammachen des Türantriebs in Notfällen und mit einer Elektronik zur Steuerung der Türfunktionen. Es ist mindestens ein Sensor zum Erkennen des mechanischen oder pneumatischen Zustandes der Notbetätigung vorgesehen, der zur Signalauswertung an eine Elektronik angeschlossen ist, wobei die Elektronik bei erkanntem Notfall einen Signalgeber ansteuert, um die Notbetätigung den Fahrgästen und/oder dem Fahrer deutlich anzuzeigen.

Es ist Aufgabe der Erfindung, ein Kraftfahrzeug der eingangs genannten Art anzugeben, das zum einen eine erhöhte passive Sicherheit für Passagiere bietet und zum anderen einen verbesserten Nutzungskomfort.

Erfindungsgemäß wird die Aufgabe dadurch gelöst, dass bei der Feststellung der nicht korrekt geschlossenen, nach hinten zu öffnenden Tür bei Überschreiten einer Grenzgeschwindigkeit ein Motor des Kraftfahrzeugs derart angesteuert wird, dass eine Grenzgeschwindigkeit nicht überschritten wird

Der Kerngedanke der Erfindung besteht darin, mit einem Türkontaktschalter selbsttätig festzustellen, ob eine Tür korrekt geschlossen ist, d.h., ob sie richtig ins Türschloss eingerastet ist. Wird von dem Türkontaktschalter ein nicht korrektes Schließen einer oder mehrerer der sich nach hinten öffnenden Türen des Kraftfahrzeugs festgestellt, dann wird von dem Türkontaktschalter ein entsprechendes Signal an ein zentrales Steuergerät des Kraftfahrzeugs weitergeleitet. Dieses steuert nachfolgend eine eigene, separate optische Anzeigevorrichtung an, beispielsweise eine Warnleuchte, eine LED, eine graphische Darstellung auf einem Display eines Bordcomputers oder dergleichen, um eine Warnmitteilung an den Fahrer des Kraftfahrzeugs auszugeben. Selbstverständlich ist das optische Signal vorzugsweise in der Signalfarbe rot gehalten. Des Weiteren kann beispielsweise an der LED oder einer Warnleuchte ein entsprechendes Symbol, das auf die Gefahr hindeutet, vorgesehen sein. Prinzipiell kann für zwei Türen auch jeweils eine separate optische Anzeigevorrichtung vorgesehen sein.

Der Vorteil der Erfindung liegt darin, dass bereits im Kraftfahrzeug vorhandene Komponenten, wie Türkontaktschalter sowie ein Steuergerät, nur geringfügig hard- und/oder softwaremäßig verändert werden müssen, um die vorstehend beschriebene Funktionalität auszuführen, wodurch der Aufwand bei der Herstellung des Kraftfahrzeugs praktisch nicht erhöht ist. Zudem wird der Fahrer durch die eigene optische Anzeigevorrichtung zuverlässig auf den Umstand der geöffneten Tür hingewiesen.

Um den Fahrer zusätzlich auf die nicht korrekt geschlossene Tür hinzuweisen, kann ein akustisches Warnsignal ausgegeben werden, beispielsweise ein Hupen oder eine Sprachmitteilung "Fondtüre geöffnet".

In einer weiteren Ausführungsform können auch verschiedene Warnsignale ausgegeben werden. Beispielsweise kann bei einem optischen Warnsignal unterhalb einer nachfolgend beschriebenen Grenzgeschwindigkeit das Warnsignal immer schneller blinkend ausgegeben werden und bei Erreichen der Grenzgeschwindigkeit das Blinken in einen dauerhaft aktivierten Zustand übergehen. Ebenso kann ein akustisches Hupsignal in der Frequenz und/oder Lautstärke zunehmen und bei der Grenzgeschwindigkeit in einen Dauerton übergehen bzw. eine andere Sprachmitteilung ausgegeben werden.

Zur weiteren Erhöhung der passiven Sicherheit wird ein Motor des Kraftfahrzeugs, z.B. eine Verbrennungskraftmaschine und/oder ein Elektromotor, derart angesteuert, dass eine eingestellte Grenzgeschwindigkeit nicht überschritten wird. Diese Grenzgeschwindigkeit ist vorzugsweise werksseitig festgelegt und kann nicht vom Nutzer geändert werden. Prinzipiell ist dies jedoch möglich. Selbstverständlich ist die Grenzgeschwindigkeit derart gewählt, dass ein Verletzungsrisiko für eine Person, die bei einem derart langsam fahrenden Kraftfahrzeug mit geöffneter Tür aus dem Fond herausfällt, so niedrig wie möglich ist. Zur Begrenzung der Fahrzeuggeschwindigkeit kann beispielsweise ein Signal bezüglich der Gaspedalstellung beeinflusst werden, damit trotz durchgedrücktem Gaspedal der Motor des Kraftfahrzeugs nicht mit voller Leistung angesteuert wird. Hierbei kann trotz der nach hinten geöffneten Tür ein Wegfahren des Kraftfahrzeugs, wenn auch mit geringen Geschwindigkeiten, nach wie vor erfolgen. Dies kann beispielsweise beim Stehenbleiben im Bereich eines Bahnübergangs notwendig sein, wenn zur Abwendung einer Gefahrensituation das Kraftfahrzeug auch mit geöffneter Tür von den Schienen heruntergefahren werden soll.

Vorzugsweise wird als Grenzgeschwindigkeit 4km/h gewählt und zwar entsprechend einer derzeit geltenden europäischen Richtlinie sowie der GTR 1 ("Global Technical Regulation"). Prinzipiell kann für verschiedene Länder eine jeweils entsprechende Grenzgeschwindigkeit gewählt werden, wenn dies aufgrund gesetzlicher Vorgaben notwendig ist.

Nach einer weiteren Ausgestaltung ist, falls entsprechende elektronische Fahrassistenzsysteme im Kraftfahrzeug vorhanden sind, ein zusätzlicher Bremseingriff ausführbar. Beispielsweise können mit einem ESP-System die Bremsen des Kraftfahrzeugs entsprechend angesteuert werden, um ein Überschreiten der Grenzgeschwindigkeit zu vermeiden. Zusätzlich oder alternativ kann auch ein Getriebe selbsttätig in die niedrigste Fahrstufe geschaltet werden, um eine zu starke Beschleunigung zu vermeiden.

Bei einer Weiterbildung werden die Signale von Radumdrehungssensoren vom Türverriegelungssystem berücksichtigt, um beispielsweise beim Schieben oder Abschleppen des Kraftfahrzeugs, zumindest sobald die Grenzgeschwindigkeit von 4km/h überschritten wird, beispielsweise durch einen Bremseingriff die Fahrzeuggeschwindigkeit zu begrenzen.

Wird das Kraftfahrzeug im normalen Betrieb mit einer höheren Geschwindigkeit als der Grenzgeschwindigkeit gefahren und sind alle Türen und Klappen des Kraftfahrzeugs in an sich bekannter Weise verriegelt, so kann beim Abbremsen des Kraftfahrzeugs die Verriegelungseinrichtung dieser sich nach hinten öffnenden Türen derart angesteuert werden, dass erst bei einem Unterschreiten der Grenzgeschwindigkeit die Verriegelung aufgehoben wird, um die Türen wieder öffnen zu können. Selbstverständlich werden hierbei die Warneinrichtungen aktiviert. Dies kann auch erst bei Stillstand des Kraftfahrzeugs erfolgen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

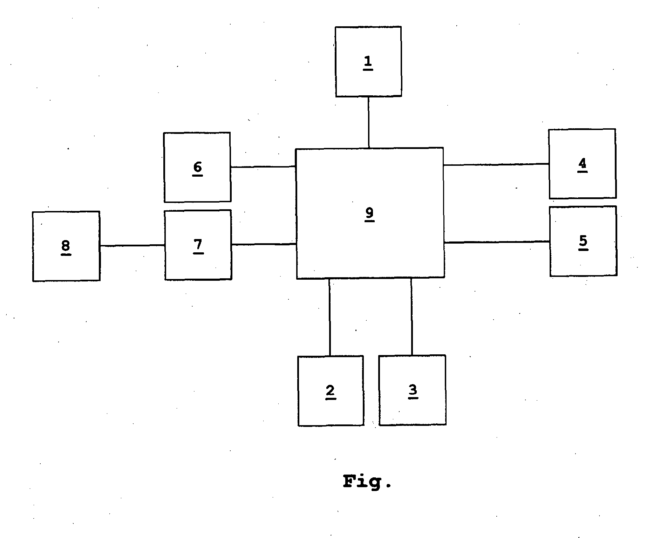

Die Erfindung wird im Folgenden anhand eines Ausführungsbeispiels mit Bezugnahme auf die Zeichnung näher erläutert. Die einzige Figur der Zeichnung zeigt ein Blockschaltbild eines Türverriegelungssystems eines erfindungsgemäßen Kraftfahrzeugs.

Das Kraftfahrzeug verfügt über zwei sich nach hinten öffnende Türen, die jeweils mit einem an sich bekannten Türkontaktschalter 1 ausgestattet sind, um zu überwachen, ob die Türen geöffnet oder korrekt geschlossen sind. Der Türkontaktschalter 1 leitet ein entsprechendes Signal an ein zentrales Steuergerät 9 des Kraftfahrzeugs weiter. Selbstverständlich ist eine Zündung 4 des Kraftfahrzeugs eingeschaltet, da ansonsten das Kraftfahrzeug nicht losfahren könnte. Wird beispielsweise von einem ABS-System 7 oder einem Radumdrehungssensor festgestellt, dass das Kraftfahrzeug fährt, wird dies ebenfalls an das zentrale Steuergerät 9 gemeldet und es wird, falls mindestens eine der nach hinten zu öffnenden Türen nicht geschlossen ist, ein optisches Warnsignal 2 und/oder ein akustisches Warnsignal 3 ausgegeben, beispielsweise ein rotes Blinklicht und/oder ein Hupton, um den Fahrer auf die geöffnete Tür aufmerksam zu machen, so dass er anhalten und die Tür schließen kann.

Weiterhin kann in diesem Fall ein Motorsteuergerät 6 derart angesteuert werden, dass die maximale Geschwindigkeit des Kraftfahrzeugs auf 4km/h beschränkt wird, auch wenn z.B. ein Gaspedal voll durchgetreten ist. Hierzu kann auch über ein ESP-System 8 ein Bremseingriff erfolgen, um die Fahrzeuggeschwindigkeit zu begrenzen. Ebenso kann ein automatisches Getriebe 5 in die niedrigste Fahrstufe geschaltet werden, um ein zu starkes Beschleunigen des Kraftfahrzeugs zu vermeiden.

### Bezugszeichenliste

- 1.: Türkontaktschalter
- 2.: optisches Warnsignal
- 3.: akustisches Warnsignal
- 4.: Zündung
- 5.: automatisches Getriebe
- 6.: Motorsteuergerät
- 7.: ABS-Steuergerät
- 8.: ESP-Steuergerät
- 9.: zentrales Steuergerät

## Patentansprüche

1. Kraftfahrzeug mit mindestens einer gegen eine Fahrtrichtung zu öffnenden Tür, der ein Türkontaktschalter (1) zugeordnet ist, wobei bei Feststellung der nicht korrekt geschlossenen, nach hinten zu öffnenden Tür ein eigenes optisches Warnsignal aktiviert wird, **dadurch gekennzeichnet, dass** bei der Feststellung der nicht korrekt geschlossenen, nach hinten zu öffnenden Tür bei Überschreiten einer Grenzgeschwindigkeit ein Motor des Kraftfahrzeugs derart angesteuert wird, dass eine Grenzgeschwindigkeit nicht überschritten wird..

2. Kraftfahrzeug nach Anspruch 1, **dadurch gekennzeichnet, dass** ein akustisches Warnsignal ausgebbar ist.

3. Kraftfahrzeug nach Anspruch 1 oder 2, **dadurch gekennzeichnet, dass** verschiedene Warnsignale ausgebbar sind.

4. Kraftfahrzeug nach Anspruch 1, **dadurch gekennzeichnet, dass** die Grenzgeschwindigkeit 4km/h beträgt.

5. Kraftfahrzeug nach Anspruch 1 oder 4, **dadurch gekennzeichnet, dass** ein zusätzlicher Bremseingriff ausführbar ist.

6. Kraftfahrzeug nach einem der Ansprüche 1 bis 5, **dadurch gekennzeichnet, dass** Signale von Radumdrehungssensoren berücksichtbar sind.

7. Kraftfahrzeug nach einem der Ansprüche 1 bis 6, **dadurch gekennzeichnet, dass** beim Abbremsen nach dem Erreichen der Grenzgeschwindigkeit die Tür öffenbar ist.

## Claims

1. A motor vehicle, comprising at least one door that can be opened against the driving direction, which door is assigned a door contact switch (1), wherein a separate optical warning signal will be activated when it is determined that the door to be opened to the rear is not closed correctly, **characterized in that** when it is determined that the door to be opened to the rear is not closed correctly and when a critical speed is exceeded an engine of the motor vehicle will be controlled in such a way that a critical speed will not be exceeded.

2. A motor vehicle according to claim 1, **characterized in that** an acoustic warning signal can be emitted.

3. A motor vehicle according to claim 1 or 2, **characterized in that** different warning signals can be emitted.

4. A motor vehicle according to claim 1, **characterized in that** the critical speed is 4 km/h.

5. A motor vehicle according to claim 1 or 4, **characterized in that** an additional brake engagement can be carried out.

6. A motor vehicle according to one of the claims 1 to 5, **characterized in that** signals of wheel revolution sensors can be considered.

7. A motor vehicle according to one of the claims 1 to 6, **characterized in that** the door can be opened during deceleration after the critical speed is reached.

## Revendications

1. Véhicule à moteur avec au moins une porte s'ouvrant en sens inverse d'un sens de la marche, qui est associée à un commutateur à contact de porte (1), dans lequel un signal visuel spécifique est activé en cas de constatation que la porte s'ouvrant vers l'arrière n'est pas correctement fermée, **caractérisé en ce que** lors de la constatation que la porte s'ouvrant vers l'arrière n'est pas correctement fermée en cas de dépassement d'une vitesse limite, un moteur du véhicule à moteur est commandé de telle manière qu'une vitesse limite ne soit pas dépassée.

2. Véhicule à moteur selon la revendication 1, **caractérisé en ce qu'**un signal d'avertissement sonore peut être émis.

3. Véhicule à moteur selon la revendication 1 ou 2, **caractérisé en ce que** différents signaux d'avertissement peuvent être émis.

4. Véhicule à moteur selon la revendication 1, **caractérisé en ce que** la vitesse limite est de 4 km/h.

5. Véhicule à moteur selon la revendication 1 ou 4, **caractérisé en ce qu'**une intervention des freins supplémentaire peut être réalisée.

6. Véhicule à moteur selon l'une des revendications 1 à 5, **caractérisé en ce que** des signaux de capteurs de rotation des roues peuvent être pris en compte.

7. Véhicule à moteur selon l'une des revendications 1 à 6, **caractérisé en ce que** la porte peut être ouverte lors de la décélération après que la vitesse limite a été atteinte.
